Europäisches Patentamt

European Patent Office

Office européen des brevets

(19)

(11) Numéro de publication: **0 107 220**
**B1**

(12) # FASCICULE DE BREVET EUROPÉEN

(45) Date de publication du fascicule du brevet:
**29.04.87**

(51) Int. Cl.⁴: **C 08 L 27/16**

(21) Numéro de dépôt: **83201344.5**

(22) Date de dépôt: **19.09.83**

(54) **Compositions à base de polymères du fluorure de vinylidène présentant une fumigénicité réduite.**

(30) Priorité: **11.10.82 FR 8217123**

(43) Date de publication de la demande:
**02.05.84 Bulletin 84/18**

(45) Mention de la délivrance du brevet:
**29.04.87 Bulletin 87/18**

(84) Etats contractants désignés:
**AT BE CH DE FR GB IT LI LU NL SE**

(56) Documents cité:
**DE-B-2 743 576**

(73) Titulaire: **SOLVAY & Cie (Société Anonyme), Rue du Prince Albert, 33, B-1050 Bruxelles (BE)**

(72) Inventeur: **Hannecart, Etienne, Arboretumlaan 38, B-1980 Tervueren (BE)**

LIBER, STOCKHOLM 1987

**0 107 220**

**Description**

La présente invention concerne des compositions à base de polymères du fluorure de vinylidène présentant une fumigénicité réduite.

Les polymères du fluorure de vinylidène sont difficilement inflammables et auto-extinguibles. On a déjà proposé d'y incorporer, avant leur mise en oeuvre, des additifs retardateurs de flamme tels que certains composés spécifiques de l'étain, en vue d'améliorer encore leur résistance à l'inflammation. Néanmoins, les retardateurs de flamme se sont généralement révélés inaptes à empêcher totalement à température élevée, la combustion des objets façonnés en polymères du fluorure de vinylidène.

Par ailleurs, la réduction de la fumigénicité, c'est-à-dire de l'aptitude à engendrer de la fumée par combustion, et le retard à l'inflammation d'une composition polymérique sont deux phénomènes différents qui n'ont pas de relation directe entre eux, à tel point que certains composés retardateurs de flamme agissent dans certains cas comme des générateurs de fumée, une fois que la combustion a effectivement commencé, ou encore que certains réducteurs de fumée induisent dans certains cas des phénomènes d'incandescence qui favorisent l'inflammation.

Jusqu'à présent, les polymères du fluorure de vinylidène avaient la réputation d'être peu fumigènes. On a cependant constaté maintenant que, contrairement à l'opinion généralement répandue, la combustion des objets façonnés en polymères du fluorure de vinylidène engendre l'émission de fumée en quantité suffisante pour constituer un inconvénient aussi grave que les flammes elles-mêmes, dans la mesure où elle rend plus difficile l'intervention des secours.

La présente invention, telle qu'elle est caractérisée dans les revendications, a donc pour but de procurer des compositions à base de polymères du fluorure de vinylidène présentant une fumigénicité réduite. Les compositions selon l'invention présentent en outre une résistance accrue à l'inflammation, c'est-à-dire des indices limites d'oxygène élevés.

Selon l'invention, ces compositions comprennent, à titre de réducteur de fumée, un ou plusieurs dérivés de molybdène. Ces dérivés peuvent être organiques ou inorganiques. Les plus efficaces, auxquels on donne par conséquent la préférence, sont les dérivés de molybdène, dans lesquels le molybdène se trouve à la valence 5 ou 6. A titre d'exemples de pareils dérivés, on peut mentionner l'acétylacétonate de molybdényle, le trioxyde de molybdène, l'hydroxyde de molybdène de formule générale $MoO(OH)_3$, les halogénures et les oxyhalogénures de molybdène, tels que le penta- et l'hexafluorure de molybdène, le pentachlorure de molybdène et le chlorure de molybdényle ($MoO_2Cl_2$), l'acide molybdique, les molybdates de métaux et d'ammonium, l'acide phosphomolybdique et les phosphomolybdates de métaux et d'ammonium.

Les dérivés de molybdène qui sont particulièrement préférés sont ceux dans lesquels le molybdène se trouve à la valence 6. Parmi ceux-ci, on donne la préférence aux molybdates de métaux. A titre d'exemples de pareils molybdates de métaux, on peut mentionner les molybdates de sodium, de bismuth, de calcium, de zinc, d'aluminium, de fer et de manganèse.

Des dérivés de molybdène tout particulièrement préférés sont les molybdates de calcium, de zinc et d'aluminium qui présentent l'avantage d'être eficaces à faible concentration, de ne pas colorer ou de ne pas induire de coloration dans les compositions notamment lors de la mise en oeuvre et qui sont par ailleurs facilement accessibles et d'un coût peu élevé.

La fabrication des dérivés de molybdène est bien connue en elle-même et décrite notamment dans Kirk-Othmer, Encyclopedia of Chemical Technology, 3rd ed., 1981, Vol 15, pp 683 et suivantes.

En plus du dérivé de molybdène, les compositions selon l'invention peuvent contenir tous les additifs usuels des polymères du fluorure de vinylidène, tels que des stabilisants, des lubrifiants, des matières de charge, des pigments, des retardateurs de flamme, des additifs polymériques etc. En général, les compositions selon l'invention contiennent au moins 65 % en poids d'un ou plusieurs polymères du fluorure de vinylidène et, le plus souvent, au moins 80 % en poids de pareils polymères.

La quantité de dérivé de molybdène présente dans les compositions selon l'invention peut varier dans une large mesure, notamment en fonction du résultat visé et de la nature du dérivé de molgbdène utilisé. Habituellement, on utilise le dérivé de molybdène à raison de 0,1 à 5 parties en poids, exprimées en molybdène métallique total, pour 100 parties de polymère du fluorure de vinylidène. De préférence, on l'utilise à raison de 0,2 à 3,5 parties en poids au total, exprimées en molybdène métallique, pour 100 parties de polymère.

Par polymères du fluorure de vinylidène, on entend désigner tous les polgmères contenant au moins 85 % molaires, et, de préférence, au moins 90 % molaires d'unités monomériques dérivées du fluorure de vinylidène. Les polymères du fluorure de vinylidène qui conviennent à la réalisation des compositions selon l'invention comprennent donc aussi bien les homopolymères du fluorure de vinylidène que ses copolymères contenant des unités monomériques dérivées d'un ou de plusieurs comonomères. Des résultats particulièrement avantageux sont obtenus avec les polymères du fluorure de vinylidène contenant au moins 90 % molaires d'unités monomériques dérivées du fluorure de vinylidène, le complément éventuel étant constitué de préférence d'unités monomériques dérivées d'autres oléfines fluorées, tels que le fluorure de vinyle, le trifluoréthylène, le chlorotrifluoréthylène, le tétrafluoréthylène et l'hexafluorpropylène.

Pour préparer les compositions selon l'invention, le dérivé de molybdène peut être mis en oeuvre sous n'importe quelle forme, en poudre ou en dispersion aqueuse par exemple. Cependant, pour des raisons de commodité, on préfère le mettre en oeuvre sous la forme d'une poudre. Dans ce cas, il est avantageux d'utiliser une poudre ayant une dimension de particules moyenne inférieure à environ 200 µm. De préférence,

celle-ci est inférieure à 100 µm et plus particulièrement à 50 µm.

La préparation des compositions selon l'invention ne présente pas de problème particulier, toutes les techniques habituelles de préparation de ces compositions pouvant être utilisées. Ainsi, on peut mélanger le dérivé de molybdène avec le polymère de fluorure de vinylidène dès le stade de la polymérisation, soit par introduction directe dans le milieu de polymérisation, en fin de polymérisation, soit encore par addition au gâteau humide obtenu par essorage ou filtration de la dispersion aqueuse venant de polymérisation. Un mode opératoire particulièrement avantageux consiste à ajouter le dérivé de molybdène au polymère du fluorure de vinylidène sous la forme d'une poudre lors de la fabrication d'un prémélange, en même temps que les autres additifs entrant dans la composition. On peut aussi introduire le dérivé de molybdène directement dans les appareils où le polymère du fluorure de vinylidène est fondu, tels que les extrudeuses à vis.

Les compositions selon l'invention sont aptes à être mises en oeuvre par tous les procédés classiques de transformation des matières thermoplastiques. Elles conviennent tout particulièrement pour la fabrication d'objets façonnés destinés à être utilisés dans des domaines d'application des polymères du fluorure de vinylidène où une réduction notable de la fumigénicité des objets façonnés est spécialement intéressante, tels que dans l'industrie du bâtiment et de l'aéronautique (tuyaux, gaines, films, peintures).

Les exemples qui suivent illustrent l'invention.

Les formulations évaluées ont la composition suivante, les quantités étant exprimées en poids:

polymère du fluorure de vinylidène 100

cire de polyéthylène 0,2

dérivé de molybdène voir Tableau I

Les dérivés de molybdène utilisés se présentent sous la forme d'une poudre ayant une dimension moyenne des particules inférieure à 50 µm.

Dans les exemples 1 à 5, le polymère est un homopolymère du fluorure de vinylidène de marque déposée SOLEF et de type 2008 produit et commercialisé par SOLVAY & Cie. Dans les exemples 6 à 10, le polymère est un copolymère du fluorure de vinylidène contenant 5 % en poids d'unités monomériques dérivées d'une oléfine fluorée de marque déposée SOLEF et de type 10510 également produit et commercialisé par SOLVAY & Cie.

Les compositions 1 à 10 ont été préparées par mélange de tous les ingrédients et malaxage du mélange à 180°C pendant 5 minutes, après quoi on a pressé des plaques par pressage du crêpe à 180°C pendant 2 min. sous une pression de 9,8 MPa.

On a également préparé, dans les mêmes conditions, des plaques à partir des formulations sans dérivé de molybdène.

· L'évaluation de la fumigénicité a été effectuée, sur des éprouvettes découpées dans les plaques pressées, à 800°C, sous un débit d'air de 300 litres/heure, suivant la norme française enregistrée NF T51-073 de septembre 1977. Dans chacune des plaques pressées, on a découpé trois éprouvettes dont la masse a été choisie au cours d'un essai préliminaire pour que la densité optique maximale ne dépasse pas 2,5 au cours de l'essai de combustion. Toutes les éprouvettes (exemples 1 à 10 et les formulations sans dérivé de molybdène) pesaient 1450 mg.

Pour chacune des éprouvettes, on a enregistré la courbe de densité optique en fonction du temps. A partir de ces courbes, on a défini:

- l'unité conventionnelle de quantité de fumée U, à savoir, la quantité de fumée correspondant à une densité optique égale à 1 pendant une durée de 1 minute;

- la quantité totale de fumée émise au cours de l'essai, S, exprimée en unités conventionnelles.

A partir de ces données, on a calculé pour chacune des éprouvettes l'indice de fumée F, F étant égal à S/m, m étant la masse de l'éprouvette exprimée en g et on a fait la moyenne pour les trois éprouvettes.

L'abattement de fumée, exprimé en %, a ensuite été calculé suivant la formule:

$\frac{F_o - F}{F_o} \times 100$, dans laquelle

F = indice de fumée moyen de l'échantillon examiné

$F_o$ = indice de fumée moyen d'un échantillon de référence sans dérivé de molybdène.

L'indice de fumée $F_o$ moyen de la formulation à base d'homopolymère de marque déposée SOLEF et de type 2008 est de 1,70. L'indice de fumée moyen $F_o$ de la formulation à base de copolymère de marque déposée SOLEF et de type 10510 est de 1,86.

Dans le Tableau I, en annexe, sont consignés la nature et la quantité de dérivé de molybdène utilisé, ainsi que l'abattement de fumée pour chaque composition, c'est-à-dire la réduction de fumée, exprimée en %, par rapport à la composition de référence (sans dérivé de molybdène).

**Tableau I**

| N° DE L'EXEMPLE | DERIVE DE MOLYBDENE | | | ABATTEMENT DE FUMEE, % |
|---|---|---|---|---|
| | Nature | Quantité en pcr* | en g de Mo/100 g de polymère** | |
| 1 | acétylacétonate | 2 | 0,59 | 70 |
| 2 | trioxyde | 2 | 1,33 | 54 |
| 3 | chlorure de molybdényle | 2 | 0,96 | 68 |
| 4 | acide phosphomolybdique | 6 | 3,06 | 76 |
| 5 | phosphomolybdate de calcium | 2 | 1,22 | 69 |
| 6 | molybdate d'ammonium | 2 | 1,09 | 33 |
| 7 | molybdate de sodium | 6 | 2,79 | 52 |
| 8 | molybdate de zinc | 2 | 0,85 | 43 |
| 9 | molybdate de calcium | 2 | 0,96 | 46 |
| 10 | molybdate d'aluminium | 2 | 0,78 | 41 |

\* parties en poids pour 100 parties de résine
\*\* évalué par photométrie d'absorption atomique

**Revendications**

1 - Compositions à base de polymères du fluorure de vinylidène contenant au moins 85 % molaires d'unités monomériques dérivées du fluorure de vinylidène présentant une fumigénicité réduite, caractérisées en ce qu'elles contiennent à titre de réducteur de fumée un dérivé de molybdène utilisé à raison de 0,1 à 5 parties en poids, exprimées en molybdène métallique total, pour 100 parties de polymères du fluorure de vinylidène.

2 - Compositions selon la revendication 1, caractérisées en ce que le dérivé de molybdène est un dérivé dans lequel le molybdène se trouve à la valence 5 ou 6.

3 - Compositions selon la revendication 1 ou 2, caractérisées en ce que le dérivé de molybdène est un dérivé dans lequel le molybdène se trouve à la valence 6.

4 - Compositions selon la revendication 3, caractérisées en ce que le dérivé de molybdène est un molybdate de métal.

5 - Compositions selon la revendication 4, caractérisées en ce que le molybdate est un molybdate de calcium, de zinc ou d'aluminium.

6 - Compositions selon la revendication 1, caractérisées en ce que le dérivé de molybdène est utilisé à raison de 0,2 à 3,5 parties en poids, exprimées en molybdène métallique total, pour 100 parties de polymères de fluorure de vinylidène.

7 - Compositions selon l'une quelconque des revendications 1 à 6, caractérisées en ce que le polymère du fluorure de vinylidène est un homopolymère du fluorure de vinylidène.

8 - Compositions selon l'une quelconque des revendications 1 à 6, caractérisées en ce que le polymère du fluorure de vinylidène est un copolymère du fluorure de vinylidène contenant au moins 90 % molaires de fluorure de vinylidène.

**Patentansprüche**

1. Zusammensetzungen auf Basis von Vinylidenfluorid-Polymeren, enthaltend mindestens 85 Mol-% an von Vinylidenfluorid abstammenden monomeren Einheiten, die eine reduzierte Rauchfähigkeit aufweisen, dadurch gekennzeichnet, daß sie als Rauchreduktionsmittel ein Molybdänderivat, verwendet zu 0,1 bis 5 Gew.-Teilen, ausgedrückt als gesamtes metallisches Molybdän, pro 100 Teile Vinylidenfluorid-Polymer enthalten.

2. Zusammensetzungen nach Anspruch 1, dadurch gekennzeichnet, daß das Molybdänderivat ein Derivat ist, in dem sich das Molybdän in der Wertigkeit 5 oder 6 befindet.

3. Zusammensetzungen nach Anspruch 1 oder 2, dadurch gekennzeichnet, daß das Molybdänderivat ein Derivat ist, in dem sich das Molybdän in der Wertigkest 6 befindet.

4. Zusammensetzungen nach Anspruch 3, dadurch gekennzeschnet, daß das Molybdänderivat ein Metallmolybdat ist.

5. Zusammensetzungen nach Anspruch 4, dadurch gekennzeschnet, daß das Molybdat ein Calcium-, Zink- oder Aluminiunmolybdat ist.

6. Zusammensetzungen nach Anspruch 1, dadurch gekennzeichnet, daß das Molybdänderivat zu 0,2 bis 3,5 Gewichtsteilen, ausgedrückt als gesamtes metallsches Molybdän, pro 100 Teile Vinylidenfluorid-Polymer verwendet ist.

7. Zusammensetzungen nach einem der Ansprüche 1 bis 6, dadurch gekennzeichnet, daß das Vinylidenfluorid-Polymer ein Vinylidenfluorid-Homopolymer ist.

8. Zusammensetzungen nach einem der Ansprüche 1 bis 6, dadurch gekennzeichnet, daß das Vinylidenflourid-Polymer ein Copolymer von Vinylidenflourid, enthaltend mindestens 90 Mol-% Vinylidenfluorid, ist.

**Claims**

1. Compositions based on vinylidene fluoride polymers containing at least 85 mol % of monomeric units derived from vinylidene fluoride, which have a reduced smoke-generating capacity, characterized in that they contain as smoke reducer a molybdenum derivative, used at a rate of 0.1 to 5 parts by weight, expressed as total molybdenum metal, per 100 parts of vinylidene fluoride polymers.

2. Compositions according to Claim 1, characterized in that the molybdenum derivative is a derivative in which the molybdenum is of valency 5 or 6.

3. Compositions according to Claim 1 or 2, characterized in that the molybdenum derivative is a derivative in which the molybdenum is of valency 6.

4. Compositions according to Claim 3, characterized in that the molybdenum derivative is a metal molybdate.

5. Compositions according to Claim 4, characterized in that the molybdate is a calcium, zinc or aluminium molybdate.

6. Compositions according to Claim 1, characterized in that the molybdenum derivative is used at a rate of 0.2 to 3.5 parts by weight, expressed as total molybdenum metal, per 100 parts of vinylidene fluoride polymers.

7. Compositions according to any one of Claims 1 to 6, characterized in that the vinylidene fluoride polymer is a vinylidene fluoride homopolymer.

8. Compositions according to any one of Claims 1 to 6, characterized in that the vinylidene fluoride polymer is a vinylidene fluoride copolymer containing at least 90 mol % of vinylidene fluoride.